**Europäisches Patentamt**

**European Patent Office**

**Office européen des brevets**

(11) Veröffentlichungsnummer: **0 220 627**
**A2**

## (12) EUROPÄISCHE PATENTANMELDUNG

(21) Anmeldenummer: **86114400.4**

(51) Int. Cl.⁴: **B60P 3/04**

(22) Anmeldetag: **17.10.86**

(30) Priorität: **26.10.85 DE 3538196**

(43) Veröffentlichungstag der Anmeldung:
**06.05.87 Patentblatt 87/19**

(84) Benannte Vertragsstaaten:
**AT BE CH DE ES FR GB IT LI LU NL SE**

(71) Anmelder: **Ketterer, Michael**
**Kesslerstrasse 11**
**D-7500 Karlsruhe 21(DE)**

(72) Erfinder: **Ketterer, Michael**
**Kesslerstrasse 11**
**D-7500 Karlsruhe 21(DE)**
Erfinder: **Meroth, Erwin**
**Maternusstrasse 3**
**D-5000 Köln 50(DE)**

(74) Vertreter: **Bauer, Wulf, Dr.**
**Wolfgang-Müller-Strasse 12**
**D-5000 Köln 51 (Marienburg)(DE)**

(54) **Pferdetransportwagen, insbesondere -anhänger.**

(57) Der Pferdetransportwagen hat einen wannenartigen, auf einem Fahrgestell (20) montierten Unterbau (22), an dem hinten eine dem Ein-und Aussteig dienende Tür vorgesehen ist. Der Unterbau (22) wird nach oben durch ein Dach (34) abgeschlossen.

Um den Pferden beim Einstieg in den Pferdetransportwagen eine gewisse freie Sicht nach schräg vorn zu ermöglichen und den begrenzten Innenraum des Pferdetransportwagens nicht beim Einsteigen erkennen zu lassen, ist zwischen dem Unterbau (22) und dem Dach (34) eine Hubeinrichtung zum Anheben des Daches (34) gegenüber dem Unterbau (22) vorgesehen. Das Dach (34) kann aus der normalen Schließposition in beliebiger Abstufung in eine angehobene Position gebracht werden, in der sich ein Freiraum zwischen Dach (34) und Unterbau (22) befindet.

FIG. 1

## Pferdetransportwagen, insbesondere -anhänger

Die Erfindung bezieht sich auf einen Pferdetransportwagen, insbesondere -anhänger, mit einem wannenartigen, auf einem Fahrgestell montierten Unterbau, an dem hinten eine für den Ein-und Ausstieg dienende Tür vorgesehen ist und mit einem vom Unterbau getragenen Dach.

Auf der Straße werden Pferde zumeist in Pferdetransportanhängern befördert, wobei in der Mehrzahl der Fälle ein Personenkraftwagen als Zugwagen dient. Teilweise sind auch selbstfahrende Pferdetransportwagen in Benutzung, ihr Einsatz ist aber mehr auf den professionellen Bereich beschränkt. Auf Straßentransportwagen dieser Art bezieht sich die Erfindung in erster Linie, ohne auf diesen Anwendungszweck beschränkt zu sein. So wird unter dem Begriff "Pferdetransportwagen" auch jede Art von Transportboxen verstanden, die für andere Verkehrsmittel, insbesondere für Flugzeuge, geeignet sind.

Pferde lassen sich oft nur unter sehr großen Mühen durch die Tür in den Innenraum eines Pferdetransportwagens bewegen, viele Pferde scheuen vor oder beim Eintritt in den in ihrer Blickrichtung abgeschlossenen, dunkleren Innenraum des Pferdetransportwagens. Sie sind oft nur nach langer Zeit und mit sehr viel Mühe dazu zu bringen, in den Transportwagen hineinzugehen. Der Grund hierfür liegt insbesondere darin, daß der Pferdetransportwagen aus verkehrstechnischen Gründen eine gewisse Höhe nicht überschreiten soll. Eine große Höhe bedeutet auch eine große Angriffsfläche für Wind, beispielsweise Seitenwind. Demzufolge ist in einem Pferdetransportwagen das Dach wesentlich tiefer als beispielsweise in einer Box.

Um den Pferden den Einstieg in den Pferdetransportwagen zu vereinfachen, sind bereits Transportwagen bekannt, die nicht nur -wie der Pferdetransportwagen der eingangsgenannten Art - an ihrer Rückfläche eine Tür haben, sondern auch an ihrer Vorderfläche mit einer Tür ausgerüstet sind. Diese vordere Tür wird geöffnet, wenn das Pferd in den Transportwagen einsteigen soll und geschlossen, sobald das Pferd sich im Transportwagen befindet. Damit das Pferd nicht durch die vordere Tür austritt, ist eine Bruststange vorgesehen.

Derartige Pferdetransportwagen mit zwei Türen haben sich jedoch nicht bewährt. Zum einen muß das Untergestell solider ausgebildet sein als bei Pferdetransportwagen mit nur einer Tür, da durch die zweite Tür die Stabilität beeinträchtigt wird. Zum anderen wird durch die Tür lediglich eine tiefer liegende Öffnung frei, durch die zwar Licht in den Innenraum des Transportwagens eintritt, der Blick nach schräg oben ist für das Pferd aber weiterhin versperrt. Für das Pferd ergibt sich vornehmlich der Eindruck, in einen schmalen Gang geschickt zu werden, dessen obere Bereiche nicht recht erkannt werden können, wodurch das Gefühl einer Enge aufkommt.

Hier setzt nun die Erfindung ein. Sie hat es sich zur Aufgabe gemacht, die Nachteile des bekannten Pferdetransport wagens mit zwei Türen zu vermeiden und den Pferdetransportwagen der eingangsgenannten Art dahingehend weiterzubilden, daß für die Pferde im Moment des Ein-und Ausstiegs aus dem Pferdetransportwagen die räumliche Enge des Pferdetransportwagens nicht erkennbar ist. Dabei soll eine Lösung gefunden werden, die auch den Umbau vorhandener Pferdetransportwagen ermöglicht und zugleich sicherstellt, daß die bisherige, bei Pferdetransportwagen erreichte Abdichtung gegen Zug und Nässe (Regen) nicht beeinträchtigt wird.

Ausgehend von dem eintürigen Pferdetransportwagen der eingangsgenannten Art wird diese Aufgabe gelöst durch eine zwischen dem Unterbau und dem Dach angeordnete Hubeinrichtung zum Anheben des Daches gegenüber dem Unterbau. Das Dach kann dabei aus einer normalen Schließposition in eine angehobene Position geliftet werden, in der ein Freiraum zwischen Dach und Unterbau auftritt.

Durch Abheben des Daches vom Unterbau hat das Pferd beim Einsteigen in den Transportwagen den Blick nach vorn und seitlich frei, so daß es die Enge des Transportwagens zunächst nicht erkennt. Das Dach befindet sich in der angehobenen Position in einer Höhe, die beispielsweise der Dachhöhe in einer Pferdebox entspricht. Insgesamt wird erreicht, daß auch empfindsame Pferde wesentlich leichter zum Einstieg in den Transportwagen bewegt werden können als dies bei anderen, insbesondere kleinen (z. B. Transportwagen für zwei Pferde) der Fall war.

Die Ausbildung der Hubeinrichtung ist im Grunde beliebig, es eignen sich Scherensysteme, Hubsysteme mit Zahnstange oder Spindel oder dergleichen. In einer besonders bevor zugten Ausbildung ist die Hubeinrichtung als Parallelogramm-System ausgeführt. Dieses System hat die besonderen Vorteile, daß sich einerseits die Bewegungen der Hubsysteme der linken und der rechten Seite mit geringem Aufwand synchronisieren lassen, beispielsweise indem die vorderen Schwingen miteinander verbunden sind, dabei wird der zur Verfügung stehende Innenraum des Pferdetransportwagens ungeändert belassen. Andererseits kann die Hubeinrichtung so ausgebildet werden, daß das Dach im vorderen Bereich stärker anhebt als im hinteren Bereich, also in der angehobenen Position eine Schrägstellung erreicht wird. Für das Pferd hat dies den Vorteil, daß der Blick nach - schräg oben in verbessertem Maße freigegeben wird.

Die Hubeinrichtung eignet sich insbesondere für Pferdetransportwagen mit einschaligem Kunststoffdach, beispielsweise aus Polyester. Derartige Dachschalen sind relativ formsteif und benötigen daher nur eine geringe Anzahl von Fixationspunkten zum Unterbau. Die Hubeinrichtung läßt sich aber ebenso bei anderen Pferdetransportwagen anbringen, beispielsweise mit Stoffdach, das von einem Metall-oder Kunststoffgerippe ausgesteift ist. Der besondere Vorzug der Hubeinrichtung liegt darin, das sie praktisch in Sekunden und mit geringem Kraftaufwand bedienbar ist, die Bedienung kann dabei von einer bequem erreichbaren Stelle aus erfolgen.

In der bereits angesprochenen, bevorzugten Ausführung bildet ein weitgehend starrer U-förmiger Bügel mit seinen Schenkeln die vorderen Schwingen eines Parallelogramms, er ist im Bereich des Übergangs seiner Schenkel zur Basis an der linken und der rechten Seitenwand des Unterbaues ange lenkt, die Gelenkpunkte befinden sich möglichst weit im vorderen Bereich des Unterbaues. Das Parallelogramm wird durch zwei hintere Schwingen, die in ihrer effektiven Länge kürzer sind als die einstückig verbundenen vorderen Schwingen, vervollständigt. Die vorderen Schwingen greifen etwa unterhalb des Schwerpunktes des Daches an, so daß die hinteren, separaten Schwingen im wesentlichen nur der Führung dienen.

In bevorzugter Weiterbildung ist der Hubeinrichtung ein Teleskoprohr mit Energiespeicher, beispielsweise Druckluft oder einer Schraubenfeder, zugeordnet. Die Spreizkraft ist so bemessen, daß das Dach im wesentlichen kräftefrei angehoben und geschlossen werden kann. Bei der Bedienung sind dann nur die mechanischen Verluste, Reibungsverluste und dergleichen, zu überwinden.

Die Hubeinrichtung läßt sich somit relativ einfach aufbauen, sie eignet sich auch für den nachträglichen Einbau in bereits vorhandene Transportwagen. Sie läßt sich auch optisch gut in das Gesamtbild des Transportwagens einfügen. Sie kann absolut wartungsfrei ausgeführt werden. Beim Öffnen und Schließen entstehen keine Geräusche durch die ein Pferd verschreckt werden könnte.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im folgenden näher erläutert wird. In dieser zeigen:

Fig. 1 eine perspektivische Darstellung eines Pferdetrans wagens mit einer Hubeinrichtung, das Dach befindet sich in der normalen Schließposition,

Fig. 2 eine Prinzipdarstellung einer Seitenansicht des Pferdetransportwagens gemäß Figur 1 bei angehobenem Dach und

Fig. 3 ein Schnittbild durch das Gelenk einer vorderen Schwinge am Dach.

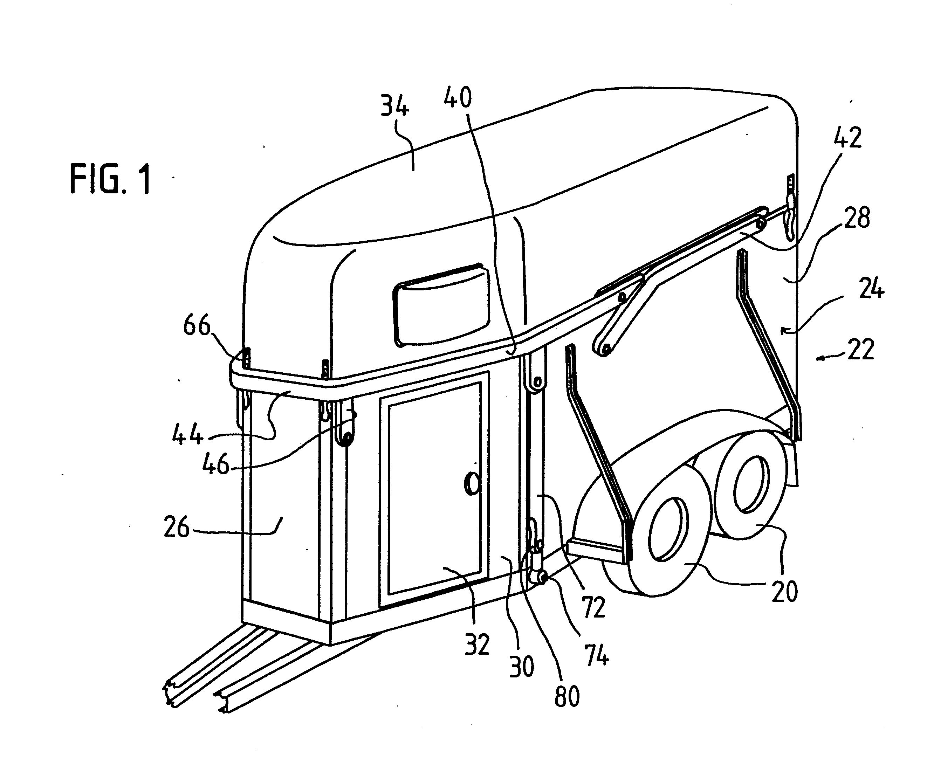

Der in Figur 1 perspektivisch dargestellte Pferdetransportanhänger hat einen wannenartigen, auf einem zweiachsigen Fahrgestell 20 montierten Unterbau 22, der aus einem Boden, einer linken Seitenwand 24, einer Frontwand 26 und einer Rückwand aufgebaut ist. In letzterer ist eine -in den Figuren nicht dargestellte -Tür bekannten Art vorgesehen, durch die ein Pferd in den Innenraum des Pferdetransportanhängers eintreten und aus ihm heraustreten kann. Diese Teile sind jedoch gegenüber dem vorbekannten Pferdetransportanhänger ungeändert, so daß auf sie nicht im einzelnen eingegangen werden muß. Die Seitenwand 24 besteht aus einem längeren, in Fahrtrichtung verlaufenden hinteren Seitenwandteil 28 und einem kürzen vorderen Seitenwandteil 30, das - schräg zur Fahrtrichtung angestellt ist und in dem eine kleine Tür 32 vorgesehen ist. Bis auf diese Tür 32 ist der Pferdetransportanhänger in Längsrichtung klappsymmetrisch.

An die geschlossen umlaufende Oberkante des Unterbaues 22 ist ein wannenförmiges Dach 34 angesetzt, das den Unterbau 22 nach oben hin regendicht abschließt. Auch das Dach ist gegenüber dem vorbekannten Pferdetransportwagen ungeändert, so daß auf die Ausbildung des Daches im einzelnen nicht ein gegangen werden muß. In bevorzugter Weise ist das Dach eine Kunststoffschale, insbesondere Polyesterschale, die in geeigneter Weise armiert ist. Insgesamt hat das - schalenförmige Dach 34 aufgrund seiner Wannenform eine hohe Eigensteifigkeit.

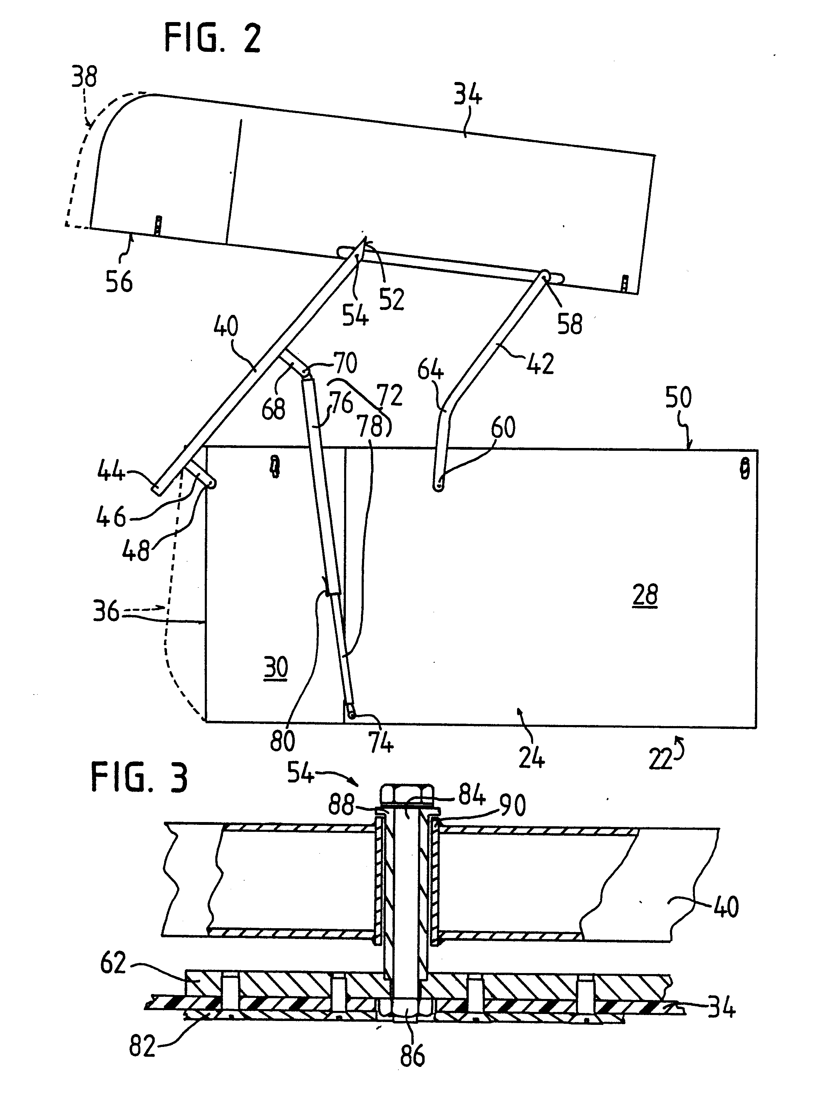

Bei dem in den Figuren 1 und 2 gezeigten Pferdetransportanhänger ist die vordere Frontwand 26 eben, sie steht senkrecht und verläuft 90° zur Fahrtrichtung. Bei anderen Pferdetransportanhängern ist diese Frontwand 26 bogenförmig ausgeführt, sie schmiegt sich in den Schrägverlauf des vorderen Seitenwandteils 30 tangential ein. Dieses geht auch nicht in einer Knickstelle in das hintere Seitenwandteil 28, sondern in einer Rundung in dieses über. Für derartige Pferetetransportanhänger ist der Verlauf der Vorderkante in Figur 2 gestrichelt dargestellt, die Vorderkante hat die Bezugsziffer 36. Das Dach in in seinem Frontbereich dem bogenförmigen Verlauf der Frontwand 26 angepaßt, dies ist durch die Dachvorderkante 38 in Figur 2 gestrichelt angedeutet.

Zwischen dem Unterbau 22 und dem Dach 34 ist eine Hubeinrichtung angeordnet, die im folgenden näher erläutert wird: Das Dach 24 ist auf beiden Seiten des Unterbaues 22 jeweils über eine vordere Schwinge 40 und eine hintere Schwinge 42 am Unterbau 22 angelenkt. Die vorderen Schwingen 40 beider Seiten sind starr und -wie im gezeigten Ausführungsbeispiel -vorzugsweise einstückig miteinander verbunden. Die vorderen Schwingen 40 bilden dabei jeweils die Schenkel eines U-förmigen Bügels,· dessen Basis 44 parallel zur Frontwand 26 verläuft. Jede vordere Schwinge 40 bzw. jeder Schenkel des U-Bügels verläuft ausgehend von der Basis 44 zunächst parallel zum zugehörigen, schräg verlaufenden Seiten wandteil 24, also divergierend und anschließend, im Bereich des Überganges zwischen vorderem Seitenwandteil 30 und hinterem Seitenwandteil 28 parallel zum hinteren Seitenwandteil 28, in diesem Bereich verlaufen die entsprechenden Teile der vorderen Schwingen beider Seiten parallel zueinander. Die vorderen Schwingen 40 sind nicht direkt, sondern über einen kurzen, senkrecht nach unten weisenden Arm 46 am Unterbau 26 in einem Gelenk 48 getragen. Der Ort dieses Gelenkes 48 soll möglichst weit vorn liegen, aus den Figuren 1 und 2 ist ersichtlich, daß das Gelenk praktisch in Höhe der ebenen Frontwand 26 liegt. Das Gelenk 48 liegt weiterhin um die Länge des Armes 46 unterhalb der Oberkante 50 des Unterbaues 22. Der Verbindungsbereich der vorderen Schwingen 40 mit ihrem jeweiligen Arm 46 ist etwa gleich weit von der Basis 44 des U-Bügels wie vom Gelenk 48 entfernt. Aufgrund der Anordnung des Gelenks 48 am unteren Ende des Arms 46 behält die Basis 44 des U-Bügels eine ausreichende Entfernung von der Frontwand 26, wenn die vorderen Schwingen 40, wie in Figur 2 dargestellt, hochgeschwenkt sind. Dies hat besondere Vorteile für die oben beschriebenen Pferdetransportanhänger mit gewölbter Frontwand 26, also der gestrichelt eingezeichneten Vorderkante 36. Wie Figur 2 zeigt, bleibt auch in dieser Ausführung ein ausreichender Freiraum zwischen der Vorderkante 36 und der Basis 44 des U-Bügels. Wäre die Hubeinrichtung lediglich für Transportwagen mit ebener Frontwand 26 ausgelegt, so könnte auf einen Arm 46 gänzlich verzichtet und das Gelenk 48 unmittelbar an der vorderen Schwinge 40 und beispielsweise im jetzigen Verbindungsbereich dieser vorderen Schwinge 40 mit dem Arm 46 angeordnet werden.

An ihren freien Endbereichen sind die vorderen Schwingen 40 mit einer Abschrägung 52 versehen, auf die später noch eingegangen wird, und in Nähe dieser Abschrägung 52 in einem Gelenk 54 am Dach 34 angelenkt. Der Gelenkpunkt 54 befindet sich sehr nah der Unterkante 56 des Daches 34 und etwa lotrecht unterhalb des Massenmittelpunktes des Daches 34. Die effektive Länge der beiden (gleichlangen) vorderen Schwingen 40, also der Abstand der Gelenkpunkte 48, 54 entspricht etwa der Höhe des Unterbaues 22.

Die effektive Länge der beiden ebenfalls gleichlangen hinteren Schwingen beider Seiten beträgt etwa nur 85 bis 90 Prozent der genannten effektiven Länge der vorderen Schwingen 40, wodurch das die Hubeinrichtung bildende Gelenkviereck geringfügig von einem echten Parallelogramm abweicht. Die hinteren Schwingen 42 sind - (beidseitig) jeweils in einem Gelenk 58 mit dem Dach 34 verbunden und in ihrem anderen Endbereich in einem Gelenk 60 am Unterbau 22, und zwar am hinteren Seitenwandteil 28 getragen. Die Gelenkpunkte 48, 54, 58 und 60 bilden das beschriebene Gelenkviereck. Der Gelenkpunkt 60 befindet sich etwas vor der Hälfte der Gesamtlänge des Unterbaues 22 und in derselben Höhe wie das Gelenk 48. Zwischen den am Dach 34 befindlichen Gelenken 54, 58 ist das Dach 34 beidseitig durch eine Versteifungsleiste 62 verstärkt, die geringfügig über die Gelenkpunkte 54, 58 seitlich hinausreicht. Sie ist bei vollständig geschlossenem Dach 34 in der Seitenperspektive praktisch vollstänig durch die Schwingen 40, 42 optisch verdeckt.

Die hinteren Schwingen 42 haben in ihrem unteren Drittel eine Abwinklung 64 um etwa 30°. Dadurch verläuft ihr oberer Bereich in der in Figur 2 gezeigten angehobenen Position praktisch parallel zu den vorderen Schwingen 40, während der untere Bereich fast vertikal verläuft. Durch die Abwinklung 64 wird erreicht, daß der längere obere Bereich in der Schließposition des Daches 34 - (siehe Fig. 1) parallel zu den Kanten 50, 56 und damit zur Trennebene von Dach 34 und Unterbau 22 verläuft. Die Abschrägung 52 verläuft dann parallel zum unteren Teilstück der hinteren Schwingen 42, wobei nur ein geringer Zwischenraum freibleibt. Optisch wird hierdurch in der Schließposition der Eindruck erweckt, als verlängerten die oberen Teile der hinteren Schwingen 42 die vorderen Schwingen 40. Wie Figur 1 zeigt, liegt auch der die vorderen Schwingen 40 ausbildende U-Bügel in der Schließposition über der Trennebene zwischen Dach 34 und Unterbau 22 und verdeckt die Kanten 50, 56.

In der Schließposition wird das Dach 34 am Unterbau 22 über eine Anzahl von Spannschlössern 66, beispielsweise vier Stück, festgezurrt. Andere Befestigungsmittel, wie z. B. die von älteren Kraftfahrzeugen bekannten Gummizuglaschen, sind möglich.

An der in den Figuren 1 und 2 dargestellten linken Seitenwand 24 ist an der dortigen vorderen Schwinge 40 in Nähe ihrer Abwinklung, jedoch im Bereich des in Fahrtrichtung verlaufenden hinteren Seitenwandteils 28 ein zweiter Arm 68 angesetzt, der wie die ersten Arme um eine Strecke von etwa 18 cm rechtwinklig nach unten vorspringt. An seinem unteren, freien Ende ist der in einem Gelenk 70 mit einer Teleskopstange 72 gelenkverbunden, die an ihrem unteren Endbereich in Höhe des Bodens des Unterbaues 22 im vordersten, untersten Eckbereich des vorderen linken Seitenwandteils 30 in einem Gelenk 74 getragen ist. In der normalen Schließposition steht diese Teleskopstange 72 vertikal, zugleich ligen die Gelenkpunkte 48, 60 und 70 in gleicher Höhe.

Die Teleskopstange 72 ist aus zwei konzentrischen Rohren, einem Außenrohr 76 und einem Innenrohr 78, aufgebaut, die ineinander geführt sind und durch eine innenliegende Schraubendruckfeder (nicht dargestellt) in Auszugsrichtung gegeneinander vorgespannt. Am unteren Endbereich des Außenrohrs 76 ist ein Klemmhebel 80 vorgesehen, wie er auch zur Verlängerung von Stielen von Fensterputzgeräten bekannt ist. Er ermöglicht eine reibschlüssige Arretierung des Außenrohrs 76 zum Innenrohr 78 in jeder beliebigen Position zwischen der normalen Schließposition und der maximalen Öffnungsstellung. Anstelle des verwendeten Klemmhebels 80 kann auch eine andere, beispielsweise formschlüssige Arretiervorrichtung Verwendung finden, hierzu müssen im Innenrohr 78 Einprägungen in gewissem Abstand vorgesehen sein, in die ein Schließteil der Arretiervorrichtung federbelastet eingreifen kann. Andere Ausbildungen sind möglich.

Die beschriebene, in der Teleskopstange 72 untergebrachte, relativ lange Schraubendruckfeder ist kraftmäßig so bemessen, daß sie das Gewicht des ganzen Daches einschließlich der anteiligen Gewichte der bewegbaren Teile der Hubeinrichtung aufnimmt. Vorzugsweise ist sie sogar etwas kräftiger eingestellt als der genannte Wert. Beim Lösen des Klemmhebels 80 steigt dadurch das Dach selbsttätig in die in Figur 2 gezeigte angehobene Position, durch geringen Zug von wenigen Kilogramm am Außenrohr 76 kann das Dach 34 wieder heruntergeholt und in die normale Schließposition gebracht werden.

Auf diese Weise können zwischen der maximalen Öffnungsstellung und der Schließposition beliebige Zwischenstellungen einge nommen werden. Dies hat beispielsweise den Vorteil, daß das Dach 34 geringfügig angehoben werden kann, wenn der Pferdetransportanhänger nicht bewegt wird und sich ein Pferd in ihm befindet. Dadurch erhält das Pferd Frischluft.

Die beschriebene Teleskopstange 72 ist lediglich ein Ausführungsbeispiel für einen vorteilhaften (grundsätzlich aber nicht notwendigen) Gewichtsausgleich der Hupeinrichtung. Anstelle der beschriebenen Teleskopstange 72 kann auch eine Gasdruckfeder, ein Öldruckstoßdämpfer mit Energiespeicher oder dergleichen Verwendung finden.

Auch der Ort der Teleskopstange 72 ist grundsätzlich beliebig, beispielsweise kann auch parallel zur Frontwand 26 eine Zugfeder zwischen der Basis 44 und einem unteren Bereich der Frontwand 26 angeordnet sein.

In Figur 3 ist schließlich die konstruktive Ausbildung eines Gelenks 54 erläutert, analog sind auch die Gelenke 58 ausgebildet. Der Innenraum des Pferdetransportwagens ist in Figur 3 unten. Bündig abschließend mit der Unterkante 56 des Daches 34 ist eine sehr flache innere Aussteifungsleiste 82 vorgesehen, die im wesentlichen einem ausreißsicheren Halt für Befestigungsmittel des Daches 34 dient. Diese Befestigungsmittel sind im gezeigten Ausführungsbeispiel als Senkschrauben ausgeführt. An der Außenseite befindet sich die bereits beschriebene Versteifungsleiste 62, so daß beide Versteifungsleisten 62, 82 das Dach 34 zwischen sich einspannen.

Das Gelenk 48 selbst ist wie folgt aufgebaut: Durch eine Bohrung in der Versteifungsleiste 62 greift eine Schraube 84, auf der Innenseite des Daches 34 ist eine Mutter 86 aufgeschraubt. Die Schraube spannt eine Hülse 88, die sie gegen die Versteifungsleiste 62 zieht. In die vordere Schwinge 40 ist eine Lagerbuchse 90 eingesetzt - (eingeschweißt), zwischen ihr und der Hülse 88 ist ein Lagergeflecht vorgesehen, um die Gelenkpunkte völlig warungsfrei zu machen.

Der die beiden vorderen Schwingen 40 ausbildende U-Bügel und die beiden hinteren Schwingen 42 sind aus stabilem Vierkantrohr in Aluminium oder Stahl gefertigt, beispielsweise ein Aluminiumrohr 40 x 60 x 2,5.

An der Unterkante 56 des Daches 34 oder der Oberkante 50 des Unterbaues 22 kann eine elastische Gummidichtung, beispielsweise eine aus dem Kraftfahrzeugbereich bekannte Lippendichtung oder eine Moosgummidichtung vorgesehen sein, um die Abdichtung zwischen Dach 34 und Unterbau zu verbessern.

In der in Figur 2 angehobenen Position befindet sich die Vorderkante des Daches 34 vor der Frontwand 26. Vorn ist zwischen der Oberkante 50 des Unterbaues 22 und der Unterkante 56 des Daches 54 ein Freiraum mit einer Höhe größer als ein Meter frei, unter der hinteren Kante des Daches 34 beträgt der Freiraum etwa 80 cm.

## Ansprüche

1. Pferdetransportwagen, insbesondere - anhänger, mit einem wannenartigen, auf einem Fahrgestell (20) montierten Unterbau (22), an dem hinten eine dem Ein-und Ausstieg dienende Tür vorgesehen ist und mit einem vom Unterbau (22) getragenen Dach (34), gekennzeichnet durch eine zwischen dem Unterbau (22) und dem Dach (34) angeordnete Hubeinrichtung zum Anheben des Daches (34) gegenüber dem Unterbau (22), so daß das Dach (34) aus einer normalen Schließposition in eine angehobene Position einstellbar ist, in der ein Freiraum zwischen dem Dach (34) und dem Unterbau (22) auftritt.

2. Pferdetransportwagen nach Anspruch 1, dadurch gekennzeichnet, daß die Hubeinrichtung an jeder Wagenseite jeweils eine vordere Schwinge (40) und eine hintere Schwinge (42) aufweist, die einerseits in Gelenken (48, 60) mit dem Unterbau - (22) und andererseits in Gelenken (54, 58) mit dem Dach (34) gelenkverbunden sind.

3. Pferdetransportwagen nach Anspruch 2, dadurch gekennzeichnet, daß die vorderen Schwingen (40) starr miteinander verbunden sind, insbesondere Schenkel eines U-Bügels sind, dessen Basis (44) parallel zu einer Frontwand (26) des Pferdetransportwagens verläuft.

4. Pferdetransportwagen nach einem der Ansprüche 1 bis 3, dadurch gekennzeichnet, daß sich der Gelenkpunkt (48) der vorderen Schwingen (40) am Unterbau (22) möglichst weit in Nähe der Vorderkante (36) befindet.

5. Pferdetransportwagen nach einem der Ansprüche 1 bis 4, dadurch gekennzeichnet, daß sich der Gelenkpunkt (54) der vorderen schwingen (40) am Dach (34) etwa unterhalb des Massenmittelpunktes des Daches (34) befindet.

6. Pferdetransportwagen nach einem der Ansprüche 3 bis 5, dadurch gekennzeichnet, daß am U-Bügel und vorzugsweise zwischen den Gelenkpunkten (48, 54) einer vorderen Schwinge (40) ein das Gewicht des Daches (34) und das anteilige Gewicht der bewegbaren Teile der Hubeinrichtung kompensierender Kraftspeicher, insbesondere eine Teleskopstange (72), vorgesehen ist.

7. Pferdetransportwagen nach einem der Ansprüche 2 bis 6, dadurch gekennzeichnet, daß sich die Schwingen (40, 42) in Schließposition des Daches (34) auf dem Unterbau (22) in Höhe der Unterkante (56) des Daches (34) bzw. der Oberkante (50) des Unterbaues (22) befinden.

8. Pferdetransportwagen nach einem der Ansprüche 2 bis 7, dadurch gekennzeichnet, daß sich die (unteren) Gelenkpunkte (48, 60) der schwingen (40, 42) in der selben Höhe des Unterbaues (22) befinden.

9. Pferdetransportwagen nach einem der Ansprüche 2 bis 8, dadurch gekennzeichnet, daß die effektive Länge der vor deren Schwingen (40) größer ist, insbesondere 1,1 bis 1,25-fach größer ist als die effektive Länge der hinteren Schwingen - (42).

10. Pferdetransportwagen Ansprüch 8, dadurch gekennzeichnet, daß die vorderen Schwingen (40) eine Abschrägung (52) aufweisen und die hinteren Schwingen eine winkelmäßig dieser Abschrägung - (52) entsprechende Abwinklung (64) haben.

11. Pferdetransportwagen nach einem der Ansprüche 1 bis 10, dadurch gekennzeichnet, daß zwischen dem Dach (34) und dem Unterbau (22) Schließmittel vorgesehen sind, die vorzugsweise als Spannschlösser (66) ausgebildet sind.

12. Pferdetransportwagen nach einem der Ansprüche 6 bis 11, dadurch gekennzeichnet, daß die Teleskopstange (72) in beliebigen Postitionen mittels eines Klemmhebels (80) feststellbar ist.

FIG. 1

## FIG. 2

## FIG. 3